Europäisches Patentamt

European Patent Office

Office européen des brevets

(19)

(11) **EP 0 984 816 B1**

(12) **FASCICULE DE BREVET EUROPEEN**

(45) Date de publication et mention
de la délivrance du brevet:
**22.01.2003 Bulletin 2003/04**

(21) Numéro de dépôt: **98925764.7**

(22) Date de dépôt: **20.05.1998**

(51) Int Cl.⁷: **A62C 3/02**, B64D 1/16

(86) Numéro de dépôt international:
**PCT/FR98/01020**

(87) Numéro de publication internationale:
**WO 98/052647 (26.11.1998 Gazette 1998/47)**

(54) **DISPOSITIF AEROPORTABLE DE LARGAGE OU ASPERSION DE PRODUITS LIQUIDES**

LUFTTRANSPORTIERTE VORRICHTUNG ZUM ABWERFEN ODER SPRITZEN VON FLÜSSIGEN
PRODUKTEN

DEVICE TRANSPORTABLE BY AIR FOR DROPPING OR SPRAYING LIQUID PRODUCTS

(84) Etats contractants désignés:
**AT BE CH CY DE DK ES FI FR GB GR IE IT LI LU
MC NL PT SE**

(30) Priorité: **21.05.1997 FR 9706495**

(43) Date de publication de la demande:
**15.03.2000 Bulletin 2000/11**

(73) Titulaire: **De Maisonneuve, Alban
F-13420 Gèmenos (FR)**

(72) Inventeur: **De Maisonneuve, Alban
F-13420 Gèmenos (FR)**

(74) Mandataire: **Marek, Pierre
Cabinet Marek,
28 & 32, rue de la Loge
13002 Marseille (FR)**

(56) Documents cités:
WO-A-94/23797          WO-A-94/28975
DE-A- 3 315 945        FR-A- 798 564
FR-A- 2 737 853

**Description**

La présente invention est relative à un dispositif aéroportable de largage ou aspersion de produits liquides (par exemple eau, additionnée ou non de produits appropriés aux interventions à effectuer).

Le domaine technique de l'invention est celui de la lutte contre les incendies, de forêts notamment, le dispositif revendiqué pouvant également être mis en oeuvre dans d'autres domaines tels que l'épandage d'engrais ou de produits pour la lutte contre des pollutions diverses ou contre l'invasion d'insectes.

On connaît par le document FR 2.737.853 A, (De MAISONNEUVE) un dispositif de lutte contre les incendies, à l'aide d'un aéronef tel qu'un hélicoptère, qui comporte un réservoir d'eau, une pompe de pressurisation et de propulsion de l'eau du réservoir dans une canalisation flexible qui s'étend et est suspendue sous l'hélicoptère sur une longueur ou hauteur de plusieurs dizaines à plusieurs centaines de mètres ; une buse d'aspersion équipe une extrémité de la canalisation flexible et permet de produire des jets principaux, des jets complémentaires ou secondaires ainsi que des jets directionnels orientés différemment pour contribuer au positionnement de la buse suspendue à l'hélicoptère par l'intermédiaire du flexible ; le réservoir et la pompe sont disposés dans l'hélicoptère.

Le dispositif aérotransportable décrit dans ce document nécessite un aménagement particulier de l'hélicoptère pour recevoir un réservoir et une pompe ; en outre son utilisation pose des problèmes de stabilité en vol de l'hélicoptère au fur et à mesure du vidage du réservoir, ainsi que aussi bien lors des variations d'assiette de l'hélicoptère que lors du décollage ou de l'atterrissage de l'engin équipé du dispositif susmentionné et de sa canalisation flexible.

On connaît aussi, par exemple par les documents DE 3.315.945 A, WO 94/28975 A, WO 9423797 A, des dispositifs "héliportables" comprenant un réservoir pour un produit liquide agencé de façon à pouvoir être suspendu à un hélicoptère, des moyens pour l'évacuation de ce produit liquide sous pression et des buses d'aspersion disposées au-dessous et quasiment au contact dudit réservoir, pour déversement dudit liquide sous forme de jets ou de mousse, certains de ces dispositifs comprenant une structure porteuse munie de patins d'appui au sol.

Ces différents dispositifs ont pour inconvénient majeur d'obliger l'hélicoptère à descendre très près des brasiers, ce qui interdit toute utilisation d'engins pilotés par des opérateurs embarqués et rend pratiquement inutilisables des engins télécommandés en raison des températures importantes auxquelles ils se trouveraient exposés.

Un premier objectif de l'invention est donc de remédier aux inconvénients ou insuffisance des dispositifs du genre de ceux qui sont décrits et illustrés dans les documents annexés.

La solution au problème posé consiste à procurer un dispositif aéroportable de largage ou aspersion d'eau ou autres produits liquides, comportant :

- un réservoir apte à contenir de l'eau ou un produit liquide ;
  des moyens de suspension amovible de ce réservoir sous un aéronef tel qu'un hélicoptère,
  des moyens de contact et/ou d'appui ou de stabilisation dudit réservoir sur le sol,

ce dispositif étant notamment remarquable en ce qu'il comporte, d'une part, une canalisation flexible dont une première extrémité est raccordée à une buse d'aspersion, et dont une deuxième extrémité est raccordée au réservoir, et, d'autre part, un enrouleur ou treuil d'enroulement de ladite canalisation flexible.

Cette dernière est, de préférence, constituée par un tuyau souple "écrasable" du genre adoptant automatiquement une conformation plate lorsqu'il se trouve hors service, l'axe de rotation de ce treuil étant avantageusement disposé au-dessous du réservoir de produit liquide.

Grâce à l'invention, il est possible de larguer ou de déverser, avec des débits importants, des liquides divers, par exemple pour la lutte contre les feux de forêts ou contre les incendies en milieu urbain ou industriel, avec les conditions de sécurité souhaitables, l'hélicoptère ou autre aéronef pouvant évoluer à une hauteur le mettant hors d'atteinte de la chaleur et des flammes engendrées par les brasiers, et au-dessus des fumées produites par ceux-ci.

Le dispositif aéroportable de largage ou aspersion d'eau ou autres produits liquides selon l'invention fonctionne sans pompe ou autre dispositif de pressurisation analogue, et a encore pour avantages :

- un poids relativement réduit ;

- un fonctionnement simple et fiable ;

- de bonnes performances hydrauliques ;

- une maintenance simplifiée ;

- un coût modéré.

Dans les documents WO 94 28975 A, FR 7.985.564 A et FR 2.737.853 A ont été décrits des dispositifs pour l'obtention de jets d'eau ou de jets de mousse pour l'extinction des incendies. Ces dispositifs ne réunissent pas les différentes conditions requises pour l'optimisation des résultats attendus notamment en ce qui concerne le débit, la formation des jets, la stabilité de la buse.

Un autre objet de l'invention est de remédier à cette situation insatisfaisante.

Selon une autre disposition caractéristique importante, un mode d'exécution préféré de l'invention comprend une buse constituée par un corps dans la partie distale duquel est logé un noyau évasé en direction de la sortie dudit corps, ce noyau évasé et la paroi interne du corps qui l'entoure délimitant un conduit de passage de section variable comprenant, de l'amont vers l'aval, un tronçon de section décroissante, un tronçon de section rétrécie et un tronçon de section croissante.

Cette disposition caractéristique favorise la formation des jets d'aspersion et permet d'améliorer les performances hydrauliques de la buse en diminuant ses pertes de charge et également de diminuer les forces de réaction résultant des jets produits par la buse.

Les buts, caractéristiques et avantages ci-dessus et d'autres encore, ressortiront mieux de la description qui suit et des dessins annexés dans lesquels :

La figure 1 illustre en vue schématique latérale un dispositif aéroporté conforme à l'invention, suspendu à un hélicoptère, et dont la canalisation souple (de longueur repérée 20) est déroulée et pend librement sous le réservoir du dispositif.

La figure 2 illustre le dispositif aéroportable de la figure 1, décroché de l'hélicoptère et reposant sur le sol.

La figure 3 est une vue en coupe longitudinale selon un plan de symétrie, d'un premier mode de réalisation d'une buse susceptible d'être utilisée pour la constitution du dispositif selon l'invention.

La figure 4 qui est une vue selon IV de la figure 3, illustre, en vue de face, l'extrémité de la buse du côté de l'orifice de sortie des jets d'aspersion.

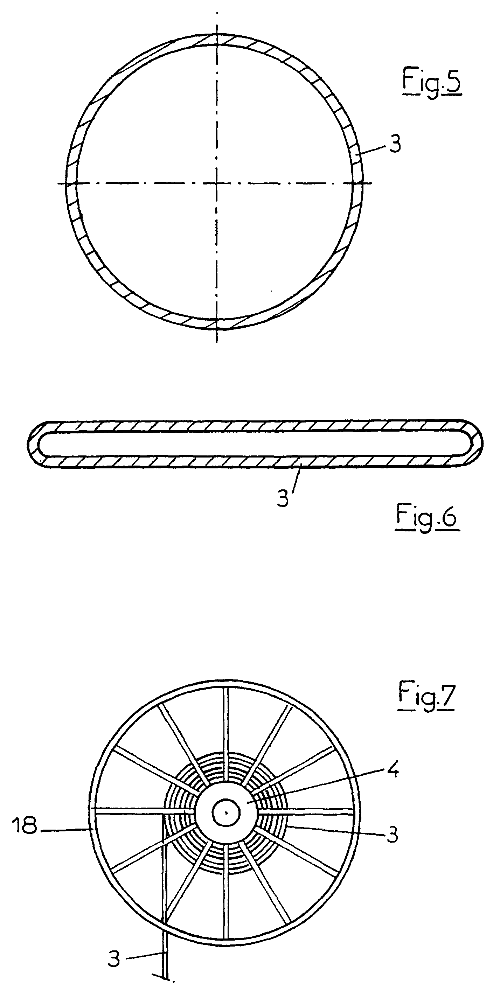

La figure 5 est une vue en coupe transversale du tuyau souple constituant la canalisation flexible, représenté à l'état gonflé.

La figure 6 est une vue en coupe transversale de ce même tuyau montré à l'état aplati.

La figure 7 est une vue de face de l'enrouleur ou treuil d'enroulement de ce tuyau souple.

La figure 8 est une vue en coupe axiale d'un deuxième mode d'exécution préféré d'une buse d'aspersion susceptible d'être utilisée pour la construction du dispositif selon l'invention.

La figure 9 est une vue en coupe axiale du chapeau d'extrémité de cette buse.

La figure 10 est une vue de face de ce chapeau d'extrémité.

La figure 11 est une représentation schématique des équations de caractérisation des surfaces du corps de la buse et de son noyau central délimitant le conduit de passage de section variable.

On se reporte auxdits dessins pour décrire des modes d'exécution intéressants, quoique nullement limitatifs, du dispositif aéroportable de largage ou aspersion de produits liquides selon l'invention.

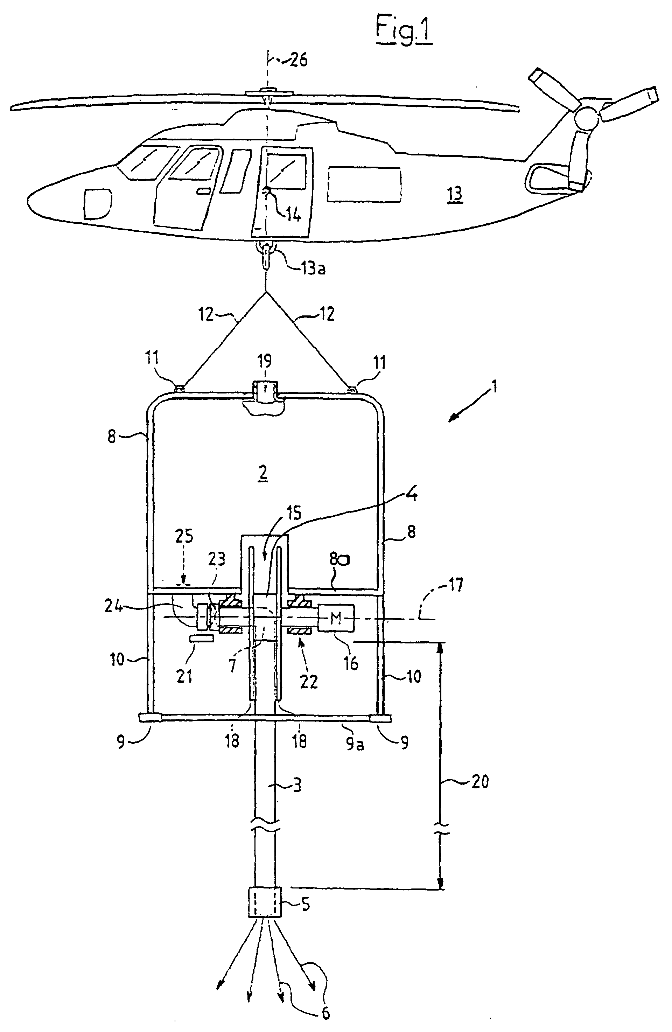

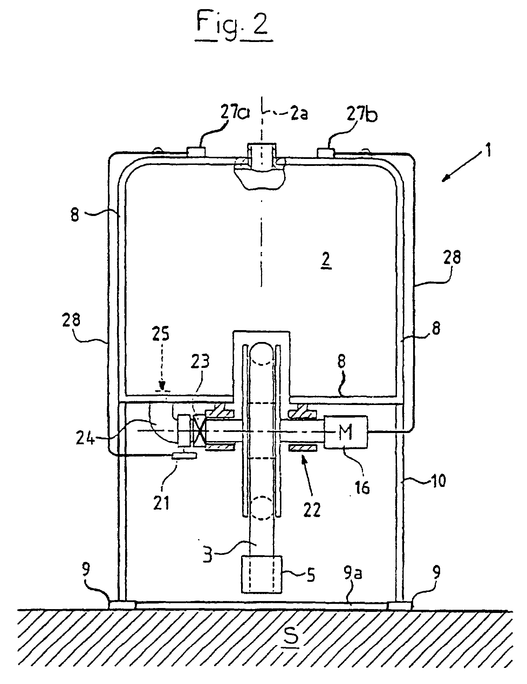

Par référence aux figures 1 et 2, le dispositif 1 conforme à l'invention comporte un réservoir étanche 2 (dont la capacité est, par exemple, de l'ordre de 1000 à 10000 litres) apte à contenir de l'eau, le cas échéant additionnée d'additif favorisant l'extinction des feux d'incendies, ou d'autres produits en fonction des applications du dispositif (engrais, insecticide, dépolluants divers, etc.) ; ce réservoir 2 est, par exemple, cylindrique et/ou de révolution d'axe vertical 2a.

Le réservoir 2 communique avec une canalisation flexible 3 reliant l'orifice de sortie 25 ménagé dans le fond du réservoir 2, à une buse d'aspersion 5 disposée à l'extrémité libre de la canalisation 3 ; la deuxième extrémité 7 de la canalisation 3 est reliée par l'intermédiaire d'un raccord ou joint tournant 23, à une canalisation fixe 24 (rigide ou souple) de raccordement à l'orifice de sortie 25 du réservoir 2. Cette canalisation de raccordement 24 est équipée d'une vanne 21 de préférence motorisée dont le fonctionnement peut être commandé par un opérateur ou par le pilote de l'hélicoptère, grâce à un câble électrique 28 d'alimentation de celle-ci, équipé d'un connecteur 27a de raccordement à un connecteur complémentaire (non représenté) équipant l'hélicoptère recevant le dispositif aéroportable.

De manière avantageuse, la canalisation flexible 3 est constituée par un tuyau souple du genre prenant automatiquement une conformation aplatie lorsqu'il n'est pas en service (par exemple un tuyau souple du type tuyau de pompier).

Ce tuyau a, par exemple, une épaisseur de l'ordre de 2,5 mm, et son diamètre interne peut être compris entre 25 et 150 mm, de préférence entre 50 à 100 mm, ce diamètre interne étant, par exemple, de l'ordre de 65 mm.

La longueur de cette canalisation souple peut varier en fonction des applications du dispositif aéroportable d'aspersion et du diamètre de ladite canalisation. Cette longueur peut, par exemple, être comprise entre 50 et 150 mètres.

Cette canalisation souple permet d'assurer une aspersion par effet de gravité (le dispositif selon l'invention est dépourvu de pompe ou autre moyen de pressurisation), en utilisant la pression résultant de la hauteur de la colonne d'eau ou autre liquide d'épandage existant à l'intérieur de ladite canalisation et du réservoir.

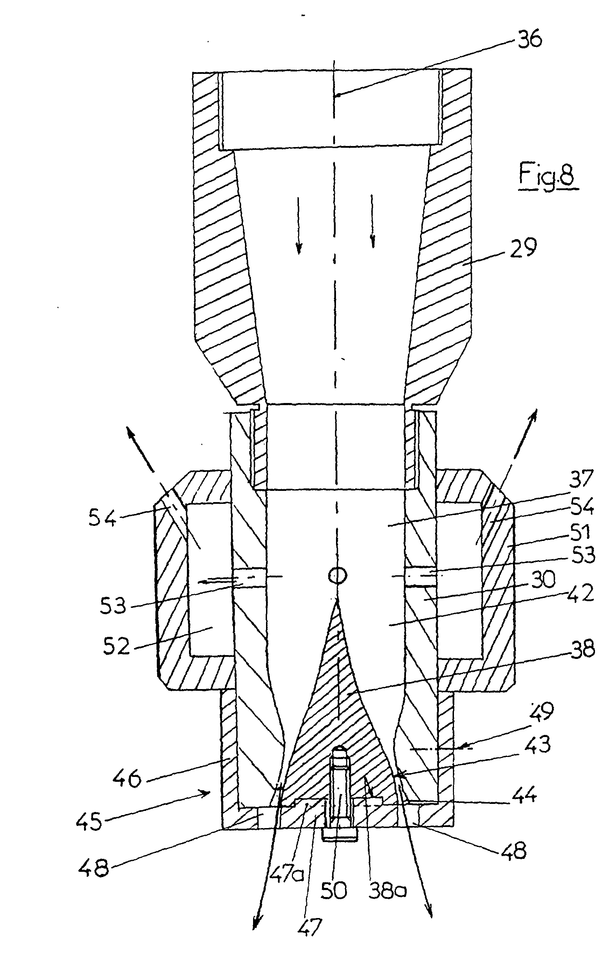

La canalisation 3 est susceptible d'être enroulée sur un enrouleur ou treuil d'enroulement 15 essentiellement constitué, de façon connu, d'un moyeu cylindrique central 4 équipé, à chacune de ses extrémités, d'une flasque 18 en forme de disque ajouré, la canalisation 3 étant apte à s'enrouler autour du moyeu central 4 et entre lesdites flasques 18 comme représenté particulièrement à la figure 7 et à la figure 2 illustrant ladite canalisation 3 totalement enroulée, à l'état aplati, en plusieurs spires imbriquées et/ou coplanaires, c'est-à-dire sur une seule épaisseur ; en conséquence, l'écartement entre les flasques 18 est peu supérieur à la largeur de la canalisation 3 à l'état aplati.

Le mouvement de rotation de l'enrouleur 15 selon son axe 17 de rotation sensiblement horizontal s'effectue grâce à un moteur 16 d'entraînement en rotation, qui est de préférence un moteur électrique raccordé à une source d'énergie électrique équipant l'hélicoptère, par l'intermédiaire d'un câble 28 équipé d'un connecteur 27b adapté ; l'enrouleur 15 est fixé à l'ossature du réservoir.

De manière avantageuse, l'enrouleur 15 est installé sous le réservoir 2, au moyen de paliers 22 fixés aux éléments horizontaux inférieurs 8a de l'ossature externe 8 du réservoir 1. De la sorte, l'axe de rotation 17 de l'enrouleur 15 est disposé au-dessous du réservoir 2. D'autre part, le plan médian de l'enrouleur coïncide avec l'un des plans médians verticaux du réservoir 2, tandis que l'axe de rotation 17 dudit enrouleur est disposé dans le plan médian vertical de ce dernier perpendiculaire au précédent.

De la sorte, les masses du dispositif se trouvent parfaitement réparties et n'entraînent aucun déséquilibre.

En outre, dans le cas préféré où l'on accroche et l'on suspend le dispositif selon l'invention (qui est sensiblement monobloc) approximativement à l'aplomb du centre de gravité 14 de l'hélicoptère et/ou dans le prolongement de l'axe de rotation du rotor principal de l'hélicoptère, on améliore encore la stabilité du vol.

L'agencement qui vient d'être décrit permet un largage ou aspersion d'eau ou autre produit liquide, par gravité, avec un débit d'épandage qui peut être compris entre 100 et 1000 litres par minute, par exemple de l'ordre de 400 à 600 litres par minute.

L'ensemble de ces constituants essentiels du dispositif est fixé à une structure ou ossature 8 sensiblement en forme de cadre entourant une partie au moins du réservoir 2 ; cette structure est munie, en partie inférieure, de jambes 10 (par exemple au nombre de trois ou quatre) terminées par des pieds ou patins 9 permettant au dispositif de reposer de façon stable sur le sol S comme illustré à la figure 2, lorsque le dispositif est en attente d'utilisation. De préférence, les pieds 9 sont reliés par des barres 9a améliorant la stabilité de l'appui du dispositif sur le sol S.

La structure 8 en forme de cadre comporte, en partie supérieure, des crochets 11 auxquels sont fixées des élingues 12 terminées par une boucle apte à être engagée dans un crochet 13a équipant un hélicoptère 13 ou autre aéronef, le crochet 13a étant sensiblement dans le prolongement vertical du centre de gravité 14 de l'hélicoptère et/ou dans le prolongement de l'axe 26 de rotation du rotor principal de celui-ci.

Le réservoir 2 est muni, en partie supérieure centrale, d'un orifice 19 servant d'évent et permettant l'introduction d'air dans le réservoir au fur et à mesure de la vidange de celui-ci.

Comme indiqué précédemment, l'extrémité libre de la canalisation souple 3 est munie d'une buse d'aspersion 5 qui pourrait être de différents types connus en soi.

Cependant, dans le but d'accroître les performances du dispositif d'épandage de produits liquides qui vient d'être décrit, l'invention inclut également une buse originale dont deux modes d'exécution sont décrits ci-après.

Cette buse d'aspersion est en premier lieu remarquable en ce qu'elle comprend un corps 30 dans la partie distale duquel est logé coaxialement un noyau central 38 évasé en direction de la sortie dudit corps, ce noyau évasé 38 et la paroi interne 31-34-35 du corps 30 qui l'entoure délimitant un conduit de passage de section variable comprenant, de l'amont vers l'aval, un tronçon cylindrique 37, un tronçon de section décroissante 42, un tronçon de section rétrécie 43 et un tronçon de section croissante 44, ce conduit de passage de section variable formant ainsi une tuyère et/ou un venturi.

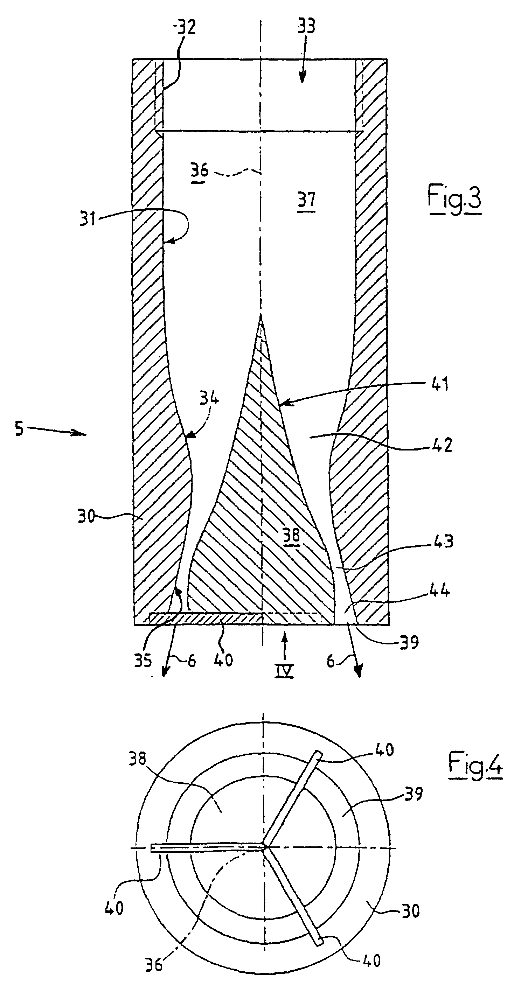

Selon le mode d'exécution représenté aux figures 3 et 4, la buse 5 est constituée par un corps 30 délimité par une face externe cylindrique de section par exemple constante et d'axe longitudinal 36 par exemple commun à la surface externe du corps 30 et à sa surface interne. La surface interne du corps 30 comporte une extrémité proximale 32 filetée pour le raccordement de la buse à la canalisation souple (non représentée) par l'orifice 33 d'entrée de la buse. Ladite surface interne comporte également une partie 31 légèrement convergente poursuivie par une portion de paroi 34 convergente elle-même poursuivie par une portion 35 de paroi interne divergente ; l'ensemble de ces parois 31, 34, 35 formant ainsi une tuyère ou venturi d'axe longitudinal 36.

Un noyau central 38, de préférence de révolution, d'axe 36 confondu avec l'axe longitudinal du corps 30, est logé coaxialement dans la partie distale dudit corps, les parois externes 41 de ce noyau central délimitant, avec les différentes portions de la paroi interne du corps 30, des conduits de passage (de préférence de révolution d'axe 36) qui sont successivement repérés 37, 42, 43, 44, et permettent le guidage de la veine de fluide s'écoulant dans la buse de l'orifice 33 d'entrée à l'orifice 39 de sortie, et la production de jets 6 (dirigés vers le sol) de façon optimale.

Le rapport de la section de l'orifice d'entrée 33 à la section de l'orifice de sortie 39 de la buse 5, est par exemple compris entre 2 et 4.

Comme illustré notamment à la figure 4, le noyau 38 est fixé et maintenu en position par rapport au corps 30 de la buse par trois ailettes profilées 40 disposées radialement à 120 degrés autour de l'axe 36 longitudinal (ou de symétrie) de la buse. Ces ailettes de liaison mécanique permettent de réduire les obstacles présents dans la veine de passage du liquide aspergé et de réduire, par conséquent, les pertes de charge, et aussi d'augmenter le débit disponible pour une hauteur d'eau déterminée.

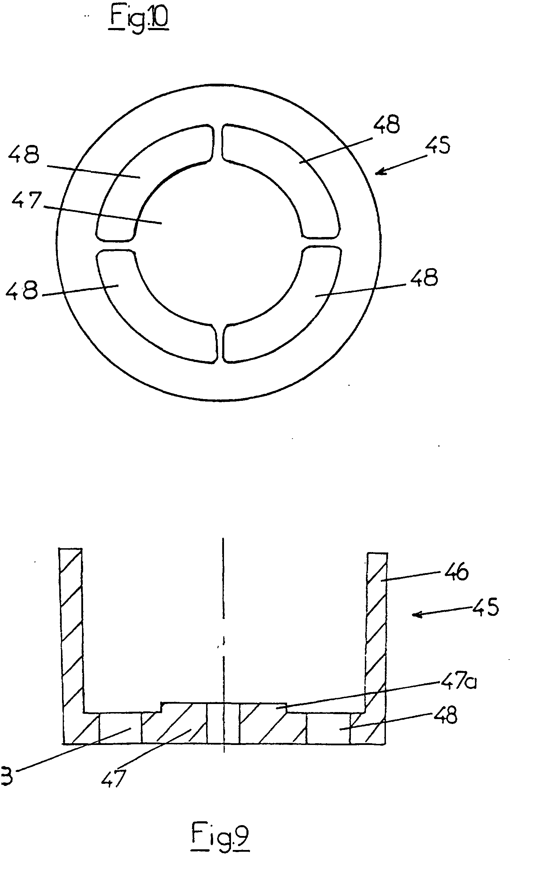

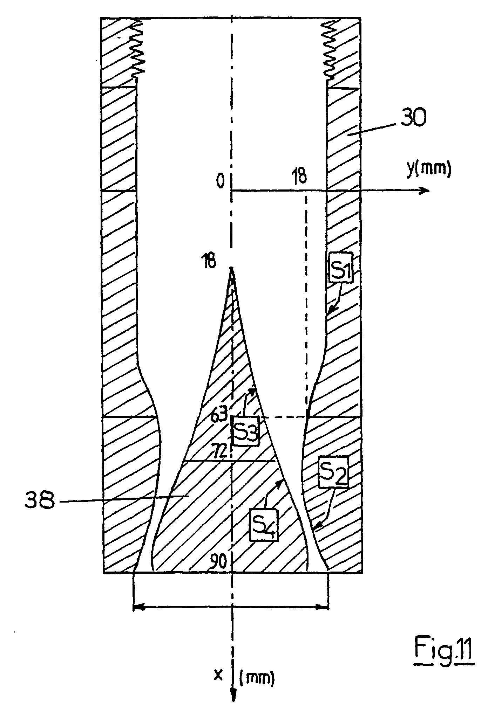

Les figures 8 à 10 illustrent un autre mode d'exécution avantageux et préféré de la buse d'aspersion selon l'invention.

Sur ces figures, les organes identiques ou remplissant les mêmes fonctions que ceux du mode d'exécution représenté aux figures 3 et 4, sont désignés par les mêmes références.

Selon ce mode d'exécution, le corps 30 est relié à l'extrémité distale de la canalisation souple 3 (non représentée) par l'intermédiaire d'un cône réducteur 29 assemblé à l'extrémité proximale dudit corps, par exemple par vissage.

La paroi interne du corps 30 et la surface latérale du noyau 38 logé coaxialement dans ledit corps délimitent, comme pour l'exemple de réalisation précédemment décrit, un conduit de passage de section variable comprenant, de l'amont vers l'avant, un tronçon cylindrique 37, un tronçon de section décroissante 42, un tronçon de section rétrécie 43 et un tronçon de section croissante 44.

Le noyau central 38 est fixé dans le corps 30 au moyen d'un chapeau 45 comprenant une surface latérale 46 et un fond 47, ce chapeau 45 coiffant l'extrémité distale du corps 30. Le fond 47 du chapeau 45 est muni de fentes arquées 48 placées en correspondance du passage de sortie 44 du corps 30 et il est fixé sur ledit corps 30 au moyen de vis figurées par les traits d'axe 49 de la figure 8.

Le noyau central 38 est fixé sur la face interne du fond 47 du chapeau 45 au moyen d'une vis axiale 50.

Les surfaces en contact du noyau central 38 et du chapeau 45 comprennent un tenon cylindrique central 47a, que présente par exemple le fond 47 du chapeau 45, et une mortaise cylindrique centrale 38a, dont est par exemple pourvue la base du noyau central 38, et dans laquelle peut glisser ledit tenon, de façon à autoriser un léger déplacement axial dudit noyau central, par exemple de l'ordre de 1 à 2 mm, au moyen de la vis 50. Cette disposition permet de régler la position axiale du noyau central 38 par rapport au corps 30, ce qui permet de faire varier le débit et la forme du jet.

Autour de la partie proximale du corps 30 est disposée une pièce de contre-jets 51 délimitant, autour de ladite partie proximale, une chambre annulaire 52 communiquant avec l'intérieur du corps 30, par l'intermédiaire d'une pluralité d'orifice radiaux 53 (par exemple au nombre de trois ou quatre) ménagés dans la paroi latérale de ce dernier.

La partie proximale de la pièce de contre-jets 51 ou paroi externe de la chambre 52, est pourvue d'une pluralité de canaux 54 débouchant à l'extérieur et orientés obliquement par rapport à l'axe 36 de la buse, en direction de l'extrémité proximale de celle-ci, c'est-à-dire vers le haut en considérant l'application très avantageuse aux dispositifs aéroportables de lutte contre les feux de forêts ou autres incendies. La pièce de contre-jets 51 est, par exemple, pourvue de trois ou quatre canaux 54 de contre-jets régulièrement espacés et orientés suivant un angle de l'ordre de 10° par rapport à l'axe 36 de la buse.

La buse selon l'invention permet une aspersion d'eau sous forme de gouttelettes, en ayant une force de réaction la plus faible possible pour un débit important.

L'eau s'écoule jusque dans le corps cylindrique. La majeure partie est transformée en gouttelettes par les formes complémentaires du noyau 38 et du corps 30. Une autre partie de l'eau alimente, par l'intermédiaire des orifices radiaux 53, la chambre de contre-jets 52. Les canaux de contre-jets 54 permettent :

- de créer une force de contre-réaction qui s'oppose à la force générée par l'aspersion d'eau ;

- de créer un brouillard d'eau qui permet de refroidir le tuyau au-dessus des flammes, dans l'application du dispositif à la lutte contre les incendies au moyen d'aéronefs tels qu'hélicoptères.

Les formes du noyau, du corps cylindrique ainsi que la pièce des contre-jets permettent de réduire significativement la force de réaction de l'aspersion d'eau. Ainsi, la buse se maintient par elle-même en position verticale à l'extrémité d'une canalisation souple avec un débit de 500 litres/minute.

Les performances remarquables de la buse d'aspersion selon l'invention sont obtenues par la définition géométriques très précise de ses surfaces variables désignées par les références S1, S2, S3 et S4, à la figure 11.

Les surfaces fonctionnelles internes S1, S2, S3 et S4 sont de révolution et définies par des équations spécifiques.

Les surfaces S1 et S2 définissent l'intérieur du corps cylindrique.

Les surfaces S3 et S4 définissent le noyau.

Le diamètre d'entrée (correspondant au diamètre extérieur de la section de passage de l'eau), identique au diamètre de sortie, peut être compris entre 10 et 150 millimètres, de préférence autour de 45 millimètres.

La buse de diamètre 45 millimètres est définie par les quatre équations suivantes :

L'axe dos x étant l'axe de la buse.

Définition du corps cylindrique

✎ **Surface S1**
(x compris entre [0,63]) : $y = 22.5 - 0.00544218 \cdot x^2 + 0.000057589 \cdot x^3$

✎ **Surface S2**
(x compris entre [63,90]) : $y = 152.5 - 5.444451 \cdot x + 0.0691359 \cdot x^2 - 0.000274349 \cdot x^3$

Définition du noyau

✎ **Surface S3**
(x compris entre [18,72]): $y = 0.123 \cdot (x-18) + 0.0023889 \cdot (x-18)^2 - 6.8587 \cdot 10^{(-7)} \cdot (x-18)^3$

✎ **Surface S4**
(x compris entre [72,90] ) : $y = 54 - 3 \cdot (x-18) + 0.06250 \cdot (x-18)^2 - 3.85802 \cdot 10^{(-4)} \cdot (x-18)^3$

La définition de buse de diamètres différents (correspondants au diamètre extérieur de la section de passage de l'eau), par exemple entre 10 et 150 millimètres, s'obtient par une homothétie depuis des équations de la buse de 45 millimètres.

Les performances intéressantes de la buse selon l'invention permettent d'envisager son utilisation sur d'autres dispositifs aéroportables d'épandage ou d'aspersion d'eau ou autres produits liquides, voire également sur des matériels d'aspersion travaillant à partir du sol.

**Revendications**

1. Dispositif aéroportable de largage ou aspersion d'eau ou autre produit liquide, par exemple pour la lutte contre les incendies, l'épandage d'engrais, d'insecticides ou de dépolluants, comprenant :

   - un réservoir (2) apte à contenir de l'eau ou un produit liquide ;

   - des moyens de suspension amovible (11, 12) de ce réservoir (2) sous un aéronef tel qu'un hélicoptère (13) ;

   - des moyens (10, 9) de contact et/ou d'appui ou de stabilisation dudit réservoir (2) sur le sol (S),

   **caractérisé en ce qu'**il comporte, d'une part, une canalisation flexible (3) dont une première extrémité est raccordée à une buse d'aspersion (5) et dont une deuxième extrémité (7) est raccordée au réservoir (2) et, d'autre part, un enrouleur ou treuil d'enroulement (15) de ladite canalisation flexible (3).

2. Dispositif aéroportable selon la revendication 1, **caractérisé en ce que** l'axe de rotation (17) de l'enrouleur (15) est disposé au-dessous du réservoir (2), de préférence dans un plan médian vertical dudit réservoir.

3. Dispositif aéroportable selon l'une des revendications 1 ou 2, **caractérisé en ce que** le plan médian de l'enrouleur (15) coïncide avec l'un des plans médians verticaux du réservoir (2).

4. Dispositif aéroportable suivant l'une quelconque des revendications 1 à 3, **caractérisé en ce que** l'enrouleur ou treuil d'enroulement (15) est entraîné en rotation par un moteur électrique (16).

**5.** Dispositif aéroportable selon l'une quelconque des revendications 1 à 4, **caractérisé en ce que** l'extrémité proximale (7) de la canalisation flexible (3) est raccordée à l'orifice de sortie (25) du réservoir (2) par l'intermédiaire d'une canalisation fixe (24) et d'un joint tournant (23).

**6.** Dispositif aéroportable suivant la revendication 5, **caractérisé en ce qu'**une vanne motorisée (21) est disposée entre le réservoir (2) et le joint tournant (23), par exemple sur la canalisation de raccordement fixe (24).

**7.** Dispositif aéroportable selon l'une quelconque des revendications 1 à 6, **caractérisé en ce que** la canalisation flexible (3) est constituée par un tuyau souple du genre adoptant automatiquement une conformation plate lorsqu'il se trouve hors service.

**8.** Dispositif aéroportable selon la revendication 7, **caractérisé en ce que** le tuyau souple présente une épaisseur de l'ordre de 2,5 mm et un diamètre interne compris entre 25 et 150 mm, de préférence entre 50 et 100 mm, ce diamètre interne étant, par exemple, de 65 mm.

**9.** Dispositif aéroportable suivant l'une quelconque des revendications 1 à 8, **caractérisé en ce que** le réservoir (2) est muni d'un évent (19) à sa partie supérieure.

**10.** Dispositif aéroportable selon l'une quelconque des revendications 1 à 9, dont la buse d'aspersion (5) comprend un corps (30) dans la partie distale duquel est logé un noyau central (38), **caractérisé en ce que** ce noyau central (38) présente une forme évasée en direction de la sortie dudit corps, ce noyau évasé (38) et la paroi interne (31, 34, 35) du corps (30) qui l'entoure délimitant un conduit de passage de section variable, comprenant, de l'amont vers l'aval, un tronçon de section décroissante (42), un tronçon de section rétrécie (43) et un tronçon de section croissante (44).

**11.** Dispositif aéroportable suivant la revendication 10, **caractérisé en ce qu'**il comporte un moyen de réglage (47a, 38a, 50) de la position axiale du noyau évasé (38).

**12.** Dispositif aéroportable selon l'une des revendications 10 ou 11, **caractérisé en ce qu'**une chambre annulaire (52) communiquant avec l'intérieur du corps (30) de la buse, est ménagée autour de la partie proximale dudit corps, la paroi externe (51) délimitant cette chambre étant pourvue d'une pluralité de canaux de contre-jets (54) débouchant à l'extérieur et orientés obliquement par rapport à l'axe (36) de la buse, en direction de l'extrémité proximale de celle-ci.

**13.** Dispositif aéroportable suivant la revendication 12, **caractérisé en ce que** les canaux de contre-jets (54) ont une inclinaison de l'ordre de 10° par rapport à l'axe (36) de la buse (5).

**14.** Dispositif aéroportable selon l'une quelconque des revendications 10 à 13, **caractérisé en ce que** le corps (30) de la buse (5) est relié à l'extrémité distale de la canalisation souple (3) par l'intermédiaire d'un cône réducteur (29).

**15.** Dispositif aéroportable suivant l'une des revendications 10 ou 11, **caractérisé en ce que** le noyau central (38) est fixé dans le corps (30) au moyen d'un chapeau (45) coiffant l'extrémité distale de ce dernier, le fond (47) de ce chapeau (45) étant muni de fentes arquées (48) placées en correspondance du passage de sortie (44) du corps (30), ledit noyau central étant fixé au moyen d'une vis axiale (50) sur la face interne du fond (47), et **en ce que** les surfaces en contact du noyau central (38) et du fond (47) du chapeau (45) comprennent, respectivement, une mortaise centrale cylindrique (38a) et un tenon central cylindrique (47a), de façon à autoriser un léger déplacement axial dudit noyau (38), au moyen de la rotation de ladite vis (50).

**16.** Dispositif aéroportable selon l'une quelconque des revendications 10 à 15, **caractérisé en ce que** le rapport de la section de l'orifice d'entrée (33) à la section de l'orifice de sortie (39) de la buse (5) est compris entre 2 et 4.

**17.** Dispositif aéroportable suivant l'une quelconque des revendications 10 à 16, **caractérisé en ce que** les surfaces fonctionnelles internes (S1, S2) du corps (30) et les surfaces fonctionnelles externes (S3, S4) du noyau central (38) de la buse (5) sont définies par les équations suivantes pour un diamètre extérieur de la section de passage de l'eau de 45 mm:

1°) <u>Surfaces internes fonctionnelles du corps (30)</u>:

$$\boxed{S_1} = y = 22,5\text{-}0,00544218x^2+0,000057583x^3. \text{ (pour } x\in[0,63].)$$

$$\boxed{S_2} = y = 152,5\text{-}5,444451x+0,06913590x^2 - 0,000274349x^3. \text{ (pour } x\in[63,90].)$$

2°) <u>Surfaces externes fonctionnelles du noyau central (38)</u>:

$$\boxed{S_3} = y = 0,123(x\text{-}18)+0,00238889\,(x\text{-}18)^2 - 6,8587.10^{-7}\,(x\text{-}18)^3. \text{ (pour } x\in[18,72].)$$

$$\boxed{S_4} = y = 54\text{-}3(x\text{-}18)+0,06250\,(x\text{-}18)^2 - 3,85802.10^{-4}\,(x\text{-}18)^3. \text{ (pour } x\in[72,90].)$$

## Claims

1. Device transportable by air for dropping or spraying water or another liquid product, for example, for firefighting, spreading fertilizer, insecticides, pollution control, comprising:

   - a tank (2) suitable to contain water or a liquid product;

   - removable means (11, 12) to be suspended under an aircraft, such as a helicopter (13);

   - means (10, 9) for contact and/or support or stabilization on the ground (S),

   **characterized in that** it comprises, on the one hand, a flexible conduit (3) whereof a first end is connected to a spraying nozzle (5) and a second end (7) is connected to the tank (2) and, on the other hand, a winding engine or winch (15) for winding of said flexible conduit (3).

2. Device transportable by air according to claim 1, **characterized in that** the axis of rotation (17) of the winding engine (15) is arranged below the tank (2), preferably in a vertical mid-plane of said tank.

3. Device transportable by air according to one of claims 1 or 2, **characterized in that** the mid-plane of the winding engine (15) coincides with one of the vertical mid-planes of the tank (2).

4. Device transportable by air according to any one of claims 1 through 3, **characterized in that** the winding engine or winch (15) is driven in rotation by an electric motor (16).

5. Device transportable by air according to any one of claims 1 through 4, **characterized in that** the proximal end (7) of the flexible conduit (3) is connected to the discharge opening (25) of the tank (2) by means of a stationary conduit (24) and a rotary joint (23).

6. Device transportable by air according to claim 5, **characterized in that** a motorized valve (21) is arranged between the tank (2) and the rotary joint (23), for example, on the stationary connecting conduit (24).

7. Device transportable by air according to any one of claims 1 through 6, **characterized in that** the flexible conduit (3) consists of a flexible hose of the type automatically assuming a flat shape when it is out of service.

8. Device transportable by air according to claim 7, **characterized in that** the flexible hose has a thickness on the order of 2.5 mm and an inside diameter comprised between 25 and 150 mm, preferably between 50 and 100 mm, with this inside diameter being, for example, 65 mm.

9. Device transportable by air according to any one of claims 1 through 8, **characterized in that** the tank (2) is equipped with a vent (19) at its top.

10. Device transportable by air according to any one of claims 1 through 9, of which the spraying nozzle (5) comprises a body (30) in the distal part of which is housed a central core (38), **characterized in that** this central core (38) has a shape flared in the direction of the discharge of said body, with this flared core (38) and the inside wall (31, 34, 35) of the body (30) which surrounds it demarcating a transit pipe with a variable cross-section, comprising, from upstream to downstream, a stretch with a decreasing cross-section (42), a stretch with a contracted cross-section (43), and a stretch with an increasing cross-section (44).

11. Device transportable by air according to claim 10, **characterized in that** it comprises a means for adjusting (47a, 38a, 50) the axial position of the flared core (38).

12. Device transportable by air according to one of claims 10 or 11, **characterized in that** an annular chamber (52) communicating with the inside of the body (30) of the nozzle is arranged around the proximal part of said body, with the outside wall (51) demarcating this chamber provided with a plurality of channels of counter jets (54) opening to the outside and oriented obliquely relative to the axis (36) of the nozzle, in the direction of the proximal end thereof.

13. Device transportable by air according to claim 12, **characterized in that** the channels of counter jets (54) are inclined on the order of 10° relative to the axis (36) of the nozzle (5).

14. Device transportable by air according to any one of claims 10 through 13, **characterized in that** the body (30) of the nozzle (5) is connected to the distal end of the flexible conduit (3) by means of a reducing cone (29).

15. Device transportable by air according to one of claims 10 or 11, **characterized in that** the central core (38) is affixed in the body (30) by means of a cap (45) covering the distal end thereof, with the bottom (47) of this cap (45) provided with arched slits (48) positioned in correspondence with the discharge passage (44) of the body (30), said central core affixed by means of an axial screw (50) on the inside face of the bottom (47), and **in that** the contact surfaces of the central core (38) and of the bottom (47) of the cap (45) comprise, respectively, a central cylindrical mortise (38a) and a central cylindrical tenon (47a), so as to permit a slight axial displacement of said core (38), by means of the rotation of said screw (50).

16. Device transportable by air according to any one of claims 10 through 15, **characterized in that** the ratio of the cross-section of the intake opening (33) to the cross-section of the discharge opening (39) of the nozzle (5) is comprised between 2 and 4.

17. Device transportable by air according to any one of claims 10 through 16, **characterized in that** the inside functional surfaces (S 1, S2) of the body (30) and the outside functional surfaces (S3, S4) of the central core (38) of the nozzle (5) are defined by the following equations for an outside diameter of the water transit section of 45 mm:

    1. Inside functional surfaces of the body (30):

$$S_1 = y = 22.5 - 0.00544218x^2 + 0.000057583x^3. \text{ (for } x \in [0,63].)$$

$$S_2 = y = 152.5 - 5.444451x + 0.06913590x^2 - 0.000274349x^3. \text{ (for } x \in [63,90].)$$

    2. Outside functional surfaces of the central core (38):

$$S_3 = y = 0.123(x-18) + 0.00238889(x-18)^2 - 6.8587.10^{-7}(x-18)^3. \text{ (for } x \in [18,72].)$$

$$S_4 = y = 54 - 3(x-18) + 0.06250(x-18)^2 - 3.85802.10^{-4}(x-,18)^3. \text{ (for } x \in [72, 90].)$$

**Patentansprüche**

1.  Lufttransportierte Vorrichtung zum Abwerfen oder Versprühen von Wasser oder einem anderen flüssigen Produkt, beispielsweise zum Bekämpfen von Bränden, Versprühen von Düngemitteln, Insektiziden oder Mitteln zur Beseitigung von Umweltverschmutzungen, umfassend:

    -   einen Behälter (2), der zum Aufnehmen von Wasser oder einem flüssigen Produkt geeignet ist;

    -   abnehmbare Aufhängungseinrichtungen(11, 12) des Behälters (2) unter einem Luftfahrzeug, wie beispielsweise unter einem Helikopter (13);

    -   Kontakt- und/oder Stützeinrichtungen (10, 9) oder Stabilisierungseinrichtungen des Behälters (2) auf dem Boden (S),

    **dadurch gekennzeichnet, daß** sie einerseits eine biegsame Rohrleitung (3) umfaßt, deren erstes Ende mit einer Sprühdüse (5) verbunden ist und deren zweites Ende (7) mit dem Behälter (2) verbunden ist, und andererseits eine Aufrolleinrichtung oder Wickelhaspel (15) für die biegsame Rohrleitung (3).

2.  Lufttransportierte Vorrichtung nach Anspruch 1, **dadurch gekennzeichnet, daß** die Rotationsachse (17) der Aufrolleinrichtung (15) über dem Behälter (2) angeordnet ist, vorzugsweise in einer mittleren vertikalen Ebene des Behälters.

3.  Lufttransportierte Vorrichtung nach Anspruch 1 oder 2, **dadurch gekennzeichnet, daß** die mittlere Ebene der Aufrolleinrichtung (15) mit einer der mittleren vertikalen Ebenen des Behälters (2) zusammenfällt.

4.  Lufttransportierte Vorrichtung nach einem der Ansprüche 1 bis 3, **dadurch gekennzeichnet, daß** die Aufrolleinrichtung oder Wickelhaspel (15) von einem Elektromotor (16) in Drehbewegung versetzt wird.

5.  Lufttransportierte Vorrichtung nach einem der Ansprüche 1 bis 4, **dadurch gekennzeichnet, daß** das proximale Ende (7) der biegsamen Rohrleitung (3) über eine feste Rohrleitung (24) und eine Drehkupplung (23) an eine Ausgangsöffnung (25) des Behälters (2) angeschlossen ist

6.  Lufttransportierte Vorrichtung nach Anspruch 5, **dadurch gekennzeichnet, daß** ein motorbetätigtes Ventil (21) zwischen dem Behälter (2) und der Drehkupplung (23) angeordnet ist, beispielsweise auf der festen Anschlußrohrleitung (24).

7.  Lufttransportierte Vorrichtung nach einem der Ansprüche 1 bis 6, **dadurch gekennzeichnet, daß** die biegsame Rohrleitung (3) aus einem Schlauch des Typs gebildet wird, der automatisch eine platte Gestalt annimmt, sobald er außer Betrieb ist.

8.  Lufttransportierte Vorrichtung nach Anspruch 7, **dadurch gekennzeichnet, daß** der Schlauch eine Dicke in der Größenordnung von 2,5 mm und einen Innendurchmesser zwischen 25 und 150 mm, vorzugsweise zwischen 50 und 100 mm aufweist, wobei dieser Innendurchmesser beispielsweise 65 mm beträgt.

9.  Lufttransportierte Vorrichtung nach einem der Ansprüche 1 bis 8, **dadurch gekennzeichnet, daß** der Behälter (2) an seinem oberen Teil mit einer Lüftungsöffnung (19) versehen ist.

10. Lufttransportierte Vorrichtung nach einem der Ansprüche 1 bis 9, deren Sprühdüse (5) einen Körper (30) aufweist, in dessen distalem Teil ein zentraler Kern (38) gelagert ist, **dadurch gekennzeichnet, daß** dieser zentrale Kern (38) eine in Richtung auf den Ausgang des Körpers ausgeweitete Form aufweist, wobei dieser ausgeweitete Kern (38) und die Innenwand (31, 34, 35) des Körpers (30), der ihn umgibt, eine Durchführungsleitung mit variablem Querschnitt begrenzen, wobei sie, von oben nach unten, einen abnehmenden Querschnittsabschnitt (42), einen eingeschnürten Querschnittsabschnitt (43) und einen zunehmenden Querschnittsabschnitt (44) umfassen.

11. Lufttransportierte Vorrichtung nach Anspruch 10, **dadurch gekennzeichnet, daß** sie mindestens ein Mittel zur Einstellung (47a, 38a, 50) der axialen Position des ausgeweiteten Kerns (38) umfaßt.

12. Lufttransportierte Vorrichtung nach einem der Ansprüche 10 oder 11, **dadurch gekennzeichnet, daß** eine ringförmige Kammer (25), die mit dem Inneren des Körpers (30) der Sprühdüse in Verbindung steht, um den proximalen Teil des Körpers ausgespart ist, wobei die äußere Wand (51), welche diese Kammer begrenzt, mit mehreren Gegendüsenkanälen (54) ausgestattet ist, die nach außen münden und in bezug auf die Achse (36) der Sprühdüse schräg in Richtung auf ihr proximales Ende ausgerichtet sind.

13. Lufttransportierte Vorrichtung nach Anspruch 12, **dadurch gekennzeichnet, daß** die Gegendüsenkanäle (54) in bezug auf die Achse (36) der Sprühdüse (5) eine Neigung in der Größenordnung von 10° aufweisen.

14. Lufttransportierte Vorrichtung nach einem der Ansprüche 10 bis 13, **dadurch gekennzeichnet, daß** der Körper (30) der Sprühdüse (5) über ein Reduzierstück (29) mit dem distalen Ende der biegsamen Rohrleitung (3) verbunden ist.

15. Lufttransportierte Vorrichtung nach einem der Ansprüche 10 oder 11, **dadurch gekennzeichnet, daß** der zentrale Kern (38) im Körper (30) mittels einer Abdeckkappe (45) befestigt ist, die das distale Ende des letzteren bedeckt, wobei der Boden (47) dieser Abdeckkappe (45) mit bogenförmigen Schlitzen (48) versehen ist, die in Übereinstimmung mit dem Ausgangskanal (44) des Körpers (30) positioniert sind, wobei der zentrale Kern mittels einer axialen Schraube (50) auf der Innenseite des Bodens (47) befestigt ist, und dadurch, daß die Kontaktoberflächen des zentralen Kerns (38) und des Bodens (47) der Abdeckkappe (45) jeweils ein zentrales zylindrisches Zapfenloch (38a) und einen zentralen zylindrischen Zapfen (47a) aufweisen, so daß eine leichte axiale Verschiebung des Kerns (38) mittels Drehung der Schraube (50) ermöglicht wird.

16. Lufttransportierte Vorrichtung nach einem der Ansprüche 10 bis 15, **dadurch gekennzeichnet, daß** das Verhältnis des Querschnitts der Eingangsöffnung (33) zum Querschnitt der Ausgangsöffnung (39) der Sprühdüse (5) zwischen 2 und 4 beträgt.

17. Lufttransportierte Vorrichtung nach einem der Ansprüche 10 bis 16, **dadurch gekennzeichnet, daß** die funktionellen Innenflächen (S1, S2) des Körpers (30) und die funktionellen Außenflächen (S3, S4) des zentralen Kerns (38) der Sprühdüse (5) durch die folgenden Gleichungen für einen Außendurchmesser des Querschnitts der Durchführungsleitung des Wassers von 45 mm definiert sind:

1.) Funktionelle Innenflächen des Körpers (30):

$$S_1 = y = 22{,}5 - 0{,}00544218x^2 + 0{,}000057583x^3. \text{ (für } x \in [0{,}63].)$$

$$S_2 = y = 152{,}5 - 5{,}444451x + 0{,}06913590x^2 - 0{,}000274349x^3 \text{ (für } x \in [63{,}90].)$$

2.) Funktionelle Außenflächen des zentralen Kerns (38):

$$S_3 = y = 0{,}123(x-18) + 0{,}00238889(x-18)^2 - 6{,}8587.10^{-7}(x-18)^3 \text{ (für } x \in [18{,}72])$$

$$S_4 = y = 54 - 3(x-18) + 0{,}06250(x-18)^2 - 3{,}85802.10^{-4}(x-18)^3 \text{ (für } x \in [72{,}90])$$

Fig.1

# Fig. 2

Fig.3

Fig.4

Fig.5

3

3

Fig.6

Fig.7

4

18

3

3

Fig.8

Fig.10

Fig.9

17

Fig.11